# EUROPÄISCHE PATENTSCHRIFT

(11) **EP 3 719 945 B1**
(45) Veröffentlichungstag und Bekanntmachung des Hinweises auf die Patenterteilung: **23.08.2023**
(21) Anmeldenummer: 20164190.9
(22) Anmeldetag: 19.03.2020
(51) Int. Cl.: H02G 3/22, H02G 15/013, F16L 5/10

(54) **VORRICHTUNG ZUM DURCHFÜHREN WENIGSTENS EINER LEITUNG DURCH EINE WANDBOHRUNG**
DEVICE FOR GUIDING AT LEAST ONE LINE THROUGH A WALL OPENING
DISPOSITIF DE POSE D'AU MOINS UNE CONDUITE DANS UN TROU D'UN MUR

(30) Priorität: 05.04.2019 DE 102019108986
(43) Veröffentlichungstag der Anmeldung: 07.10.2020
(73) Patentinhaber: Langmatz GmbH, 82467 Garmisch-Partenkirchen (DE)
(72) Erfinder:
(74) Vertreter: Flosdorff, Jürgen

(56) Entgegenhaltungen:
- EP-A1- 2 405 170
- EP-A2- 2 333 924
- EP-A2- 3 217 057
- DE-A1- 3 411 990

## Beschreibung

Die Erfindung betrifft eine Vorrichtung zum Durchführen wenigstens einer Speedpipe oder wenigstens eines Kabels durch eine Wandbohrung, die durch eine Gebäudewand führt, mit einem die Wandbohrung an der Gebäudeaußenseite überdeckenden, an der Gebäudewand anliegenden äußeren Klemmkörper, der ein Loch zum Einführen der wenigstens einen Speedpipe oder des wenigstens eines Kabels hat, und einem die Wandbohrung an der Gebäudeinnenseite überdeckenden, an der Gebäudewand anliegenden inneren Klemmkörper, durch den die wenigstens eine Speedpipe oder das wenigstens eine Kabel austreten kann, wobei der innere Klemmkörper einen rohrförmigen Abschnitt, durch den die wenigstens eine Speedpipe oder das wenigstens eine Kabel durchführbar ist und der in die Wandbohrung eingesetzt wird, und einen im unbelasteten Zustand im Winkel dazu verlaufenden rahmenartigen Abschnitt aufweist, der an die Gebäudewand anpressbar ist, wobei an den rohrförmigen Abschnitt des inneren Klemmkörpers außerhalb der Wandbohrung ein rinnenförmiger Abschnitt anschließt, aus dem die wenigstens eine Speedpipe oder das wenigstens eine Kabel zwischen voneinander beabstandete Stege des rahmenartigen Abschnitts führbar ist, zwischen denen die wenigstens eine Speedpipe oder das wenigstens eine Kabel entlang einer gekrümmten Führungsbahn des rahmenartigen Abschnitts unter Einhaltung eines zulässigen Mindestradius zu einer Austrittsöffnung führbar ist, wobei in dem rohrförmigen Abschnitt ein Stopfen mit einem mittigen Durchgangsloch angeordnet ist, der dicht an der Innenwand des rohrförmigen Abschnitts anliegt, wobei der Stopfen aus einem elastischen Material besteht, und wobei der Durchmesser des Durchgangslochs etwas kleiner ist als derjenige der dünnsten hindurchführbaren Speedpipe und/oder Kabels, wobei die wenigstens eine Speedpipe (5) oder das wenigstens eine Kabel ohne ein umgebendes Schutzrohr anordentbar ist.

Die EP 2 410 222 A1 offenbart eine Vorrichtung zum Befestigen und Abdichten einer durch eine Wandöffnung einer Gebäudewand führenden Leitung, bei der es sich um ein Leer-Rohr handelt, das beispielsweise ein Wasserrohr, ein Gasrohr oder eine Telekommunikationsleitung aufnimmt. Dieses Leer-Rohr erfordert eine Wandbohrung mit einem Durchmesser von wenigstens 40 mm, deren Ausbildung mit einem beträchtlichen Arbeitsaufwand verbunden ist.

Die EP 2 333 924 A1 offenbart eine Wanddurchführung der eingangs genannten Art. Die Wanddurchführung ist insbesondere zur Durchführung eines durch ein Kabelschutzrohr geschützten Glasfaser-Kabels bestimmt. Bei dem Kabelschutzrohr handelt es sich um ein flexibles Kunststoffrohr. Das Kabelschutzrohr ist von einem Nageschutzrohr umgeben. Die DE 34 11 990 A1 offenbart eine Mauerdurchführung aus Kunststoff, bei der das Durchziehen des Kabels auch an schwer zugänglichen Stellen bei einwandfreier Abdichtung zwischen Kabel und einem Stutzen erleichtert ist. Hierzu besteht jeder Stutzen aus einem Einführteil aus glattem, nicht dehnbaren Kunststoff, der einen aus federnden Zungen zusammengesetzten Abschnitt aufweist, auf den ein Dichtungsteil aus elastischem dehnbaren Material aufgesetzt ist, dessen über den Einführteil überstehender zylindrischer, im Gebrauchszustand sich dichtend auf den Kabelmantel legender Abschnitt im Nichtgebrauchszustand zu einem Wulst aufgerollt ist.

Die EP 3 217 057 A2 offenbart eine Vorrichtung und ein Verfahren zum Befestigen und Abdichten einer Leitungsdurchführung in einem Wanddurchgang einer Gebäudewand, bei der die Leitungsdurchführung, beispielsweise ein Leerrohr, von einer Verteilermanschette umgeben ist, wobei zwischen der Außenseite des Leerrohres und der Innenseite der Verteilermanschette ein ringförmiger umlaufender Ringspaltraum ausgebildet ist, dessen radiale Breite größer als 0,5 mm und kleiner als 5 mm ist. Dieser schmale Ringspaltraum reicht aus, eine gute Verteilung einer Aushärtsubstanz bereit zu stellen. Die EP 2 405 170 A1 befasst sich mit einer Vorrichtung zum Durchführen wenigstens einer Leitung durch einen Durchgang einer Wand, in dem eine Kanalstruktur eingesetzt wird. Zum Festlegen der Einsetzposition der Kanalstruktur in Axialrichtung des Durchgangs ist vorgesehen, dass eine Montageanlageplatte durch eine Gelenkverbindung an der Kanalstruktur gekoppelt ist, so dass mehrere Winkelstellungen zwischen der Montage-anlageplatte und der Kanalstruktur einnehmbar sind.

Die vorliegende Erfindung sieht vor, dass wenigstens eine Speedpipe oder wenigstens ein Kabel ohne ein derartiges größeres Leer-Rohr oder Schutzrohr durch die Wandbohrung hindurchgeführt wird, wobei die Speedpipe bevorzugt einen Durchmesser von 7 mm, 10 mm oder 12 mm hat und ein durch die Wandbohrung geführtes Kabel auch dicker sein kann. Die erfindungsgemäße Vorrichtung kommt wegen des fehlenden Leer-Rohrs mit einem Durchmesser von etwa 20 mm bis 25 mm aus, so dass diese Wandbohrung durch eine Handbohrmaschine hergestellt werden kann, was mit einem erheblich verringerten Arbeitsaufwand verbunden ist.

Wenn eine derartige Leitung durch eine Wandbohrung in ein Gebäude eingeführt wird, muss sie in der Wand mechanisch befestigt werden, und der Zwischenraum zwischen der Leitung und der Wand muss gegen den Durchtritt von Wasser und Gas abgedichtet werden. Hierzu ist es aus der EP 2 410 222 A1 bekannt, das Leer-Rohr durch ein Lochrohr größeren Durchmessers hindurch zu führen. In dieses Lochrohr wird gemäß der Offenbarung der EP 2 410 222 A1 eine zunächst fließfähige, dann aufschäumende und erhärtende Füllsubstanz eingefüllt, die aus einer Vielzahl von über den Umfang verteilten kleinen Löchern aus dem umgebenden Lochrohr austritt und Hohlräume in der Wandbohrung ausfüllt, so dass der Zwischenraum der Wandbohrung abgedichtet wird.

Wenn eine Speedpipe durch eine Wandbohrung und die beiderseitigen Klemmkörper hindurch geführt ist, werden zu einem späteren Zeitpunkt Glasfasern in die zunächst leere Speedpipe eingeblasen. Da bei Glasfasern die Dämpfung unzulässig steigt, wenn ein minimal zulässiger Biegeradius unterschritten wird, ist es wichtig, dass Speedpipes so durch die Wandbohrung und die beiderseitigen Klemmkörper geführt werden, dass ihr Biegeradius an keiner Stelle den zulässigen minimalen Biegeradius unterschreitet. Ein kritischer Bereich liegt in dem an der Gebäudeinnenseite anliegenden Klemmkörper, in dem die Speedpipe nach horizontalem oder schrägen Verlauf durch die Wandbohrung bevorzugt nach oben umgelenkt wird, damit die Speedpipe nach dem Austritt aus der Wandbohrung an einen an der Wand über der Wandbohrung angeordneten GF-Abschlusspunkt angeschlossen werden kann.

Wenn die zunächst fließfähige Füllsubstanz in den inneren Klemmkörper eintritt und beim Aufschäumen kräftig expandiert, kann sie einen großen Druck auf die hindurchgeführte Speedpipe ausüben und deren Verlauf vor allem im Bereich der Umlenkung nach oben so verändern, dass der zulässige Mindestradius der Speedpipe unterschritten wird, so dass eingeblasene Glasfasern eine unzulässige Dämpfung erfahren können. Ein besonders kritischer Bereich liegt in der Krümmung der Speedpipe beim Austritt aus einem rinnenförmigen Abschnitt zu der nach oben führenden Führungsbahn. Wenn der kritische Mindestradius der Speedpipe unterschritten wird, ist die Wanddurchführung unbrauchbar.

Der vorliegenden Erfindung liegt die Aufgabe zugrunde, eine Vorrichtung der betrachteten Art anzugeben, bei der das obige Problem vermieden ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass der innere Klemmkörper einen rohrförmigen Abschnitt hat, der in die Wandbohrung eingesetzt wird und durch den wenigstens eine Speedpipe oder wenigstens ein Kabel durchführbar ist. Der rohrförmige Abschnitt ist bevorzugt über biegbare Stege mit einem rahmenartigen Abschnitt verbunden, der im Winkel zu dem rohrförmigen Abschnitt verläuft und an die Gebäudewand anpressbar ist. Der rohrförmige Abschnitt setzt sich außerhalb der Wandbohrung mit einem oben offenen, rinnenförmigen Abschnitt fort, aus dem die wenigstens eine Speedpipe oder das wenigstens eine Kabel nach oben zwischen voneinander beabstandete Stege des rahmenartigen Abschnitts geführt wird. Der rahmenartige Abschnitt enthält eine gekrümmte Führungsbahn, deren Radius den zulässigen Mindestradius der Glasfaser nicht unterschreitet, so dass die Speedpipe sich ohne Gefahr einer unzulässigen Dämpfung der einzublasenden Glasfasern an die gekrümmte Führungsbahn anlegen kann.

Die Erfindung sieht weiter vor, dass in dem rohrförmigen Abschnitt, durch den die wenigstens eine Speedpipe oder das wenigstens eine Kabel geführt wird, ein Stopfen mit einem mittigen Durchgangsloch angeordnet ist, der dicht an der Innenwand des rohrförmigen Abschnitts anliegt. Dieser Stopfen besteht aus einem elastischen Material wie z.B. Moosgummi.

Der Durchmesser des Durchgangslochs ist etwas kleiner als derjenige der dünnsten hindurchgeführten Speedpipe und beträgt vorzugsweise etwa 6 mm. Außerdem ist erfindungsgemäß vorgesehen, dass im Randbereich des rohrförmigen Abschnitts biegbare Zungen angeformt sind, die in radialer Richtung zu dem Durchgangsloch des Stopfens verlaufen und den Rand des Durchgangslochs ein wenig überdecken. Die biegbaren Zungen verlaufen dabei schräg ins Innere des rohrförmigen Abschnitts auf das Durchgangsloch zu.

Die Zungen können in Umfangsrichtung voneinander beabstandet sein und werden beim Durchführen einer Speedpipe vorzugsweise so gegen den Rand des Durchgangslochs gedrückt, dass sie dabei den Rand des Durchgangslochs ein wenig aufweiten. Hierdurch können Speedpipes oder Kabel verschiedener Durchmesser glatt durch den rohrförmigen Abschnitt hindurchgeführt werden, wobei sich der Stopfen dicht an die wenigstens eine Speedpipe oder das wenigstens eine Kabel anlegt. Hierdurch ist gewährleistet, dass keine zunächst fließfähige, dann aufschäumende und erhärtende Füllsubstanz in den inneren Klemmkörper eindringt und den Verlauf der gekrümmten Speedpipe so verändern kann dass der zulässige Mindestradius unterschritten wird.

Der innere Klemmkörper besteht in vorteilhafter Ausgestaltung der Erfindung aus einem thermoplastischen Kunststoff wie ABS, der bei dünner Wandstärke verformbar bzw. biegbar und bei größerer Wandstärke starr ist. Dies ermöglicht es, die Zungen beim Durchführen einer Speedpipe gegen den Rand des Durchgangslochs zu biegen und dabei die Eintrittsöffnung des Durchgangslochs aufzuweiten.

Der äußere Klemmkörper ist erfindungsgemäß mit einer Durchgangsöffnung versehen, die mit dem Innenraum des Lochrohres in Verbindung steht, so dass durch diese Durchgangsöffnung die expandierbare Füllsubstanz in das Lochrohr einfüllbar ist, die aus einer Vielzahl von kleinen Löchern aus dem Lochrohr austritt und die Hohlräume in der Wandbohrung ausfüllt, so dass der Zwischenraum der Wandbohrung abgedichtet ist. Die expandierbare Füllsubstanz tritt auch am Ende des Lochrohres aus, das mehrfach aufgeschlitzt sein kann, um die wenigstens eine Speedpipe oder das wenigstens eine Kabel austreten zu lassen.

Im übrigen können auch der äußere Klemmkörper und das Lochrohr aus einem thermoplastischen Kunststoff wie ABS bestehen.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine Ausführungsform der Vorrichtung bei horizontaler Durchführung einer Speedpipe durch eine aus Hohlblocksteinen bestehende, angedeutete Wand;
- Figur 2: eine vergrößerte Darstellung des inneren Klemmkörpers mit einem Lochrohr;
- Figur 3: eine andere Ansicht eines Teils des inneren Klemmkörpers.

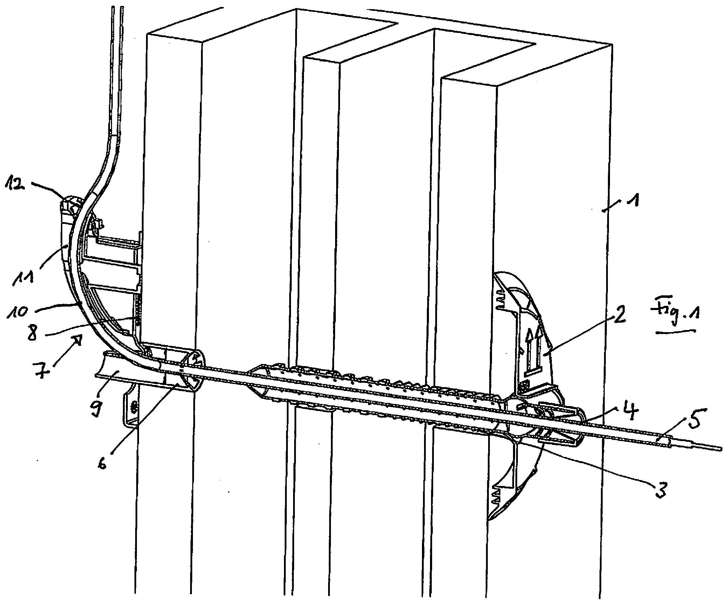

In Figur 1 ist die rechte Wandseite 1 die Gebäudeaußenseite. Durch die mit Hohlblocksteinen angedeutete Wand führt eine horizontale Wandbohrung, die an der Gebäudeaußenseite von einem äußeren Klemmkörper 2 überdeckt wird, der im wesentlichen eine Tellerform hat und mit seinem Rand dicht an der Gebäudewand anliegt. An der Innenseite des äußeren Klemmkörpers 2 ist ein Lochrohr 3 gelenkig befestigt, das eine durch eine Öffnung 4 in dem äußeren Klemmkörper 2 eingeführte Speedpipe 5 mit Abstand umgibt.

Die Speedpipe 5 tritt auf der anderen Seite der Wand in einen rohrförmigen Abschnitt 6 eines inneren Klemmkörpers 7 ein, der über biegbare Stege einstückig mit einem rahmenartigen Abschnitt 8 des inneren Klemmkörpers 7 verbunden ist, der dicht an der Innenwand an der Gebäudeinnenseite anliegt. Der rahmenförmige Abschnitt 8 ist in dem dargestellten Fall in einem Winkel von 90° gegenüber dem rohrförmigen Abschnitt 6 angeordnet.

Der rohrförmige Abschnitt 6 setzt sich außerhalb der Wand als oben offener, rinnenförmiger Abschnitt 9 fort, so dass die Speedpipe 5 nach oben aus dem rinnenförmigen Abschnitt 9 austreten kann. Die Speedpipe 5 wird an einer gekrümmten Führungsbahn 10 nach oben geführt und verläuft zwischen Stegpaaren 11 zu einer Austrittsöffnung 12 aus dem inneren Klemmkörper 7.

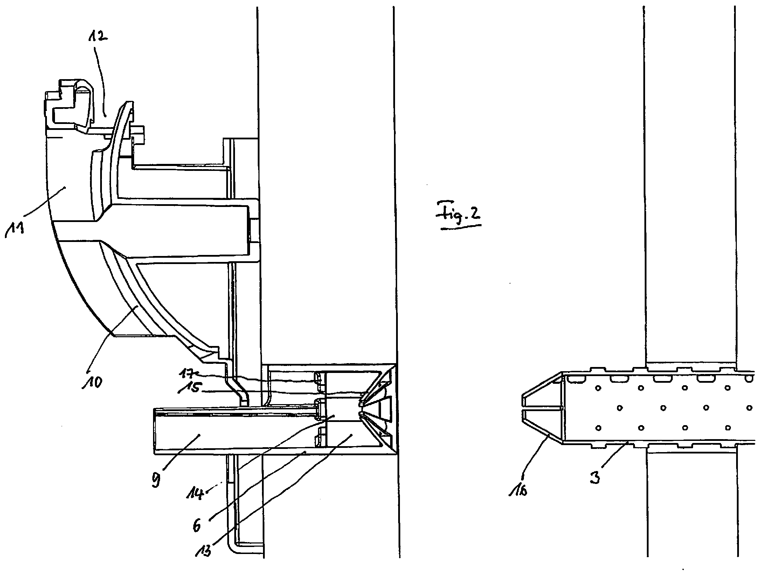

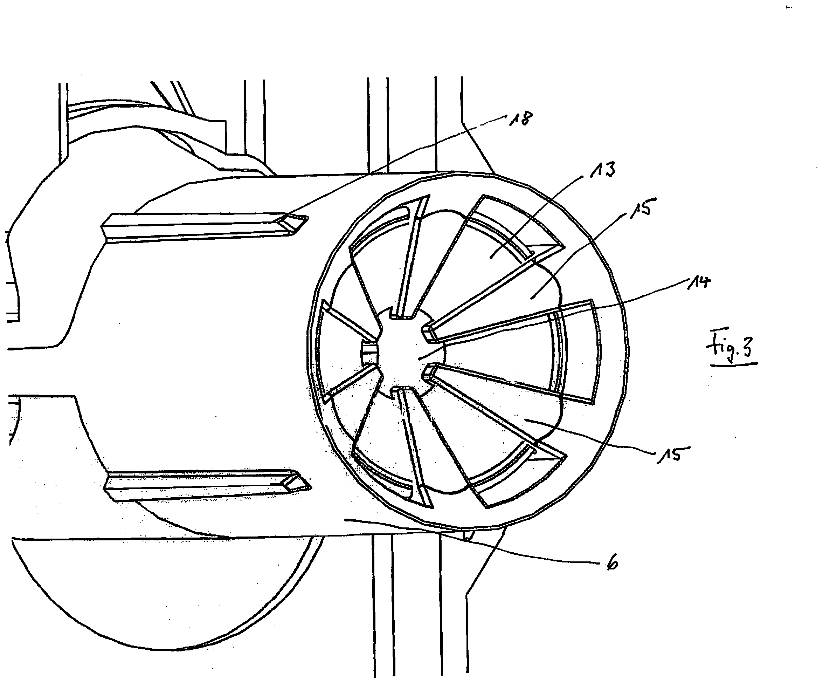

Die Figuren 2 und 3 zeigen, dass in dem rohrförmigen Abschnitt 6 ein Stopfen 13 mit einem mittigen Durchgangsloch 14 angeordnet ist. Der Stopfen 13 besteht aus einem elastischen Material und liegt dicht an der Innenwand des rohrförmigen Abschnitts 6 an. Der Durchmesser des Durchgangslochs ist etwas kleiner als derjenige der dünnsten hindurchgeführten Speedpipe und beträgt vorzugsweise etwa 6 mm.

Am Randbereich des rohrförmigen Abschnitts 6 sind biegbare Zungen 15 angeformt, die in Umfangsrichtung des rohrförmigen Abschnitts 6 voneinander beabstandet sind und in radialer Richtung zu dem Durchgangsloch 14 verlaufen und dabei den Rand des Durchgangslochs 14 überdecken. Die biegbaren Zungen 15 verlaufen schräg ins Innere des rohrförmigen Abschnitts 6 auf das Durchgangsloch 14 zu.

Figur 2 zeigt auch, dass das Lochrohr 3 in einigem Abstand vor dem rohrförmigen Abschnitt 6 endet. Der Endbereich 16 des Lochrohres 3 verengt sich konisch zum vorderen Ende hin und ist vierfach geschlitzt. Beim Durchführen einer dickeren Speedpipe oder eines dickeren Kabels werden die so gebildeten Flügel auseinander gebogen. Mit dieser Ausbildung wird verhindert, dass die in das Lochrohr 3 eingefüllte schäumbare Substanz nahezu vollständig aus dem Ende des Rohres austritt.

Der Stopfen 13 liegt im Inneren des rohrförmigen Abschnitts 6 an Anschlägen 17 an, die an der Innenwand des rohrförmigen Abschnitts 6 angeformt sind.

Figur 3 zeigt, dass der rohrförmige Abschnitt 6 an seiner Außenseite mit in Längsrichtung verlaufenden, vorstehenden Leisten 18 versehen ist, mit denen der rohrförmige Abschnitt 6 nach Art eines Dübels in der Wandbohrung sicher gehalten ist.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Vorrichtung zum Durchführen wenigstens einer Speedpipe (5) oder wenigstens eines Kabels durch eine Wandbohrung, die durch eine Gebäudewand führt, mit einem die Wandbohrung an der Gebäudeaußenseite überdeckenden, an der Gebäudewand anliegenden äußeren Klemmkörper (2), der ein Loch zum Einführen der wenigstens einen Speedpipe oder des wenigstens eines Kabels hat, und einem die Wandbohrung an der Gebäudeinnenseite überdeckenden, an der Gebäudewand anliegenden inneren Klemmkörper (7), durch den die wenigstens eine Speedpipe (5) oder das wenigstens eine Kabel austreten kann,
wobei der innere Klemmkörper (7) einen rohrförmigen Abschnitt (6), durch den die wenigstens eine Speedpipe (5) oder das wenigstens eine Kabel durchführbar ist und der in die Wandbohrung eingesetzt wird, und einen im unbelasteten Zustand im Winkel dazu verlaufenden rahmenartigen Abschnitt (8) aufweist, der an die Gebäudewand anpressbar ist,
wobei an den rohrförmigen Abschnitt (6) des inneren Klemmkörpers (7) außerhalb der Wandbohrung ein rinnenförmiger Abschnitt (9) anschließt, aus dem die wenigstens eine Speedpipe (5) oder das wenigstens eine Kabel zwischen voneinander beabstandete Stege (11) des rahmenartigen Abschnitts (8) führbar ist, zwischen denen die wenigstens eine Speedpipe (5) oder das wenigstens eine Kabel entlang einer gekrümmten Führungsbahn (10) des rahmenartigen Abschnitts (8) unter Einhaltung eines zulässigen Mindestradius zu einer Austrittsöffnung (12) führbar ist, wobei in dem rohrförmigen Abschnitt (6) ein Stopfen (13) mit einem mittigen Durchgangsloch (14) angeordnet ist, der dicht an der Innenwand des rohrförmigen Abschnitts (6) anliegt,
wobei der Stopfen (13) aus einem elastischen Material besteht, und
wobei der Durchmesser des Durchgangslochs (14) etwas kleiner ist als derjenige der dünnsten hindurchführbaren Speedpipe und/oder Kabel,
wobei die wenigstens eine Speedpipe (5) oder das wenigstens eine Kabel ohne ein umgebendes Schutzrohr anordentbar ist,
**dadurch gekennzeichnet,**
**dass** mit dem äußeren Klemmkörper (2) an dessen Innenseite ein Lochrohr (3) verbunden ist, das die wenigstens eine Speedpipe (5) oder das wenigstens eine Kabel mit radialem Abstand umgibt,
**dass** der äußere Klemmkörper (2) eine Durchgangsöffnung aufweist, durch die eine zunächst fließfähige, dann expandierende und erhärtende Füllsubstanz in das Lochrohr (3) einfüllbar ist,
**dass** am Randbereich des rohrförmigen Abschnitts (6) biegbare Zungen (15) angeformt sind, die in radialer Richtung zu dem Durchgangsloch (14) des Stopfens (13) verlaufen und den Rand des Durchgangslochs (14) überdecken, und
**dass** die biegbaren Zungen (15) schräg ins Innere des rohrförmigen Abschnitts (6) auf das Durchgangsloch (14) zu verlaufen.

2. Vorrichtung nach Anspruch 1,
**dadurch gekennzeichnet,**
**dass** der Winkel 90° beträgt.

3. Vorrichtung nach einem der Ansprüche 1 oder 2,
**dadurch gekennzeichnet,**
**dass** die Zungen (15) in Umfangsrichtung voneinander beabstandet sind.

4. Vorrichtung nach einem der Ansprüche 1 bis 3,
**dadurch gekennzeichnet,**
**dass** die Zungen (15) beim Durchführen einer Speedpipe gegen den Rand des Durchgangsloches (14) gedrückt werden und dabei den Rand aufweiten.

5. Vorrichtung nach einem der Ansprüche 1 bis 4,
**dadurch gekennzeichnet,**
**dass** der rohrförmige Abschnitt (6) und der rahmenartige Abschnitt (8) des inneren Klemmkörpers (7) durch biegbare Stege einstückig verbunden sind, so dass der Winkel zwischen dem rohrförmigen Abschnitt (6) und dem rahmenartigen Abschnitt (8)veränderbar ist, und
**dass** das Lochrohr (3) durch ein Gelenk mit dem äußeren Klemmkörper (2) verbunden ist, so dass die Klemmkörper (2, 7) sowohl bei horizontaler als auch im Winkel hierzu durch die Gebäudewand führender Wandbohrung dicht an die Gebäudewand anpressbar sind.

## Claims

1. Apparatus for guiding at least one speedpipe (5) or at least one cable through a wall opening, which extends through a building wall, with an outer clamping body (2), which engages the building wall and overlaps the wall opening at the outer side of the building and which has a hole for the introduction of the at least one speedpipe or the at least one cable, and an inner clamping body (7) which engages the building wall and overlaps the wall opening at the outer side of the building and through which the at least one speedpipe (5) or the at least one cable can pass out, wherein the inner clamping body (7) has a tubular section (6), through which the at least one speedpipe (5) or the at least one cable may be passed and which is inserted into the wall opening and a frame-like section (8) which, in the unloaded state, extends at an angle thereto, and which may be pressed against the building wall, wherein adjoining the tubular section (6) of the inner clamping body (7) outside the wall opening there is a channel-shaped section (9), out of which the at least one speedpipe (5) or the at least one cable may be guided between webs (11), spaced from one another, on the frame-like section (8), between which the at least one speedpipe (5) or the at least one cable may be guided along a curved guide track (7) on the frame-like section (8) whilst maintaining a permissible minimum radius to an outlet opening (12), wherein arranged in the tubular section (6) there is a stopper (13) with a central through hole (14), which closely engages the inner wall of the tubular section (6), wherein the stopper (13) consists of an elastic material and wherein the diameter of the through hole (14) is somewhat smaller than that of the thinnest speedpipe and/or cable which may be passed through, wherein the at least one speedpipe (5) or the at least one cable may be disposed without a surrounding protective tube, **characterised in that** connected to the inner side of the outer clamping body (2) there is an apertured tube, which surrounds the at least one speedpipe (5) or the at least one cable with a radial spacing, that the outer clamping body (2) has a passage opening, through which a filling material, which is initially flowable and then expands and sets, may be poured into the apertured tube (3), that integrally formed on the edge region of the tubular section (6) there are flexible tongues, which extend in the radial direction to the through hole (14) in the stopper (13) and overlap the edge of the through hole (14), and that the flexible tongues (15) extend obliquely into the interior of the tubular section (6) towards the through hole (14).

2. Apparatus as claimed in Claim 1, **characterised in that** the angle is 90°.

3. Apparatus as claimed in one of Claims 1 or 2, **characterised in that** the tongues (15) are spaced from one another in the peripheral direction.

4. Apparatus as claimed in one of Claims 1 to 3, **characterised in that** when a speedpipe is passed through, the tongues (15) are pressed against the edge of the through hole (14) and thus widen the edge.

5. Apparatus as claimed in one of Claims 1 to 4, **characterised in that** the tubular section (6) and the frame-like section (8) of the inner clamping body are integrally connected by flexible webs so that the angle between the tubular section (6) and the frame-like section (8) may be altered and that the apertured tube (3) is connected to the outer clamping body (2) by a joint so that the clamping bodies (2, 7) may be pressed tightly against the building wall when the wall opening extends both horizontally and also at an angle thereto through the building wall.

## Revendications

1. Dispositif pour faire passer au moins un Speed Pipe (5) ou au moins un câble à travers un alésage de paroi, qui est guidé à travers une paroi de bâtiment, avec un corps de serrage (2) extérieur reposant sur la paroi de bâtiment, recouvrant l'alésage de paroi sur le côté extérieur de bâtiment, qui a un trou destiné à introduire l'au moins un Speed Pipe ou l'au moins un câble, et avec un corps de serrage intérieur (7) reposant sur la paroi de bâtiment, recouvrant l'alésage de paroi sur le côté intérieur de bâtiment, par lequel l'au moins un Speed Pipe (5) ou l'au moins un câble peut sortir,
dans lequel le corps de serrage intérieur (7) présente une section tubulaire (6), par laquelle l'au moins un Speed Pipe (5) ou l'au moins un câble peut être guidé de part en part et qui est inséré dans l'alésage de paroi, et une section de type cadre (8) s'étendant de manière angulaire par rapport à celle-ci dans l'état non contraint, qui peut être pressée sur la paroi de bâtiment,
dans lequel se raccorde à la section tubulaire (6) du corps de serrage intérieur (7) à l'extérieur de l'alésage de paroi une section en forme de goulotte (9), depuis laquelle l'au moins un Speed Pipe (5) ou l'au moins un câble peut être guidé entre des entretoises (11) tenues à distance les unes des autres de la section de type cadre (8), entre lesquelles l'au moins un Speed Pipe (5) ou l'au moins un câble peut être guidé le long d'une voie de guidage (10) incurvée de la section de type cadre (8) en respectant un rayon minimal admis en direction d'une ouverture de sortie (12), dans lequel est disposé, dans la section tubulaire (6), un bouchon (13) avec un trou de passage central (14), qui repose de manière étanche sur la paroi intérieure de la section tubulaire (6),
dans lequel le bouchon (13) est constitué d'un matériau élastique, et
dans lequel le diamètre du trou de passage (14) est légèrement inférieur à celui du Speed Pipe et/ou du câble le plus mince pouvant être guidé au travers,
dans lequel l'au moins un Speed Pipe (5) ou l'au moins un câble peut être disposé sans un tube de protection l'entourant,
**caractérisé en ce**
**qu'**est relié au corps de serrage extérieur (2) sur son côté intérieur un tube perforé (3), qui entoure avec une distance radiale l'au moins un Speed Pipe (5) ou l'au moins un câble,
**que** le corps de serrage extérieur (2) présente une ouverture de passage, par laquelle une substance de remplissage pouvant d'abord s'écouler, puis s'expansant et durcissant peut être transvasée dans le tube perforé (3),
**que** sont formées sur la zone de bord de la section tubulaire (6) des languettes (15) pouvant être cintrées, qui s'étendent dans la direction radiale vers le trou de passage (14) du bouchon (13) et recouvrent le bord du trou de passage (14), et
**que** les languettes (15) pouvant être cintrées s'étendent de manière oblique à l'intérieur de la section tubulaire (6) sur le trou de passage (14).

2. Dispositif selon la revendication 1,
**caractérisé en ce**
**que** l'angle est de 90°.

3. Dispositif selon l'une quelconque des revendications 1 ou 2,
**caractérisé en ce**
**que** les languettes (15) sont tenues à distance les unes des autres dans la direction périphérique.

4. Dispositif selon l'une quelconque des revendications 1 à 3,
**caractérisé en ce**
**que** les languettes (15) sont poussées contre le bord du trou de passage (14) lors du guidage de part en part d'un Speed Pipe et élargissent ce faisant le bord.

5. Dispositif selon l'une quelconque des revendications 1 à 4,
**caractérisé en ce**
**que** la section tubulaire (6) et la section de type cadre (8) du corps de serrage intérieur (7) sont reliées d'un seul tenant par des entretoises pouvant être cintrées de sorte que l'angle entre la section tubulaire (6) et la section de type cadre (8) peut être modifiée, et
**que** le tube perforé (3) est relié par une articulation au corps de serrage extérieur (2) de sorte que les corps de serrage (2, 7) peuvent être pressés de manière étroite contre la paroi de bâtiment à la fois dans le cas d'un alésage de paroi horizontal et dans le cas d'un alésage de paroi menant à travers la paroi de bâtiment de manière angulaire par rapport à celui-ci.
